# EUROPEAN PATENT APPLICATION

(11) **EP 4 380 002 A1**
(43) Date of publication of application: **05.06.2024**
(21) Application number: 22868917.0
(22) Date of filing: 15.08.2022
(51) Int. Cl.: H02J 7/02, H02J 7/00, B60L 53/22, B60L 1/00, B60L 1/02, B60R 16/033

(54) **CHARGING/DISCHARGING DEVICE AND VEHICLE**

(30) Priority: 14.09.2021 CN 202111072647
(71) Applicant: Huawei Digital Power Technologies Co., Ltd., Shenzhen, Guangdong 518043 (CN)
(72) Inventor: ZHANG, Wei, Shenzhen, Guangdong 518043 (CN); FENG, Ningbo, Shenzhen, Guangdong 518043 (CN); CUI, Zhaoxue, Shenzhen, Guangdong 518043 (CN)
(74) Representative: Isarpatent
(86) International application number: PCT/CN2022/112542
(87) International publication number: WO 2023/040541

(57) **Abstract**

Embodiments of this application disclose a charging and discharging apparatus and a vehicle, to reduce complexity of a structural layout of the vehicle and improve integration of the vehicle. The charging and discharging apparatus includes: an AC/DC conversion circuit, configured to convert an input first alternating current into a first direct current; a DC/DC conversion circuit, coupled to the AC/DC conversion circuit, and configured to rectify the first direct current to output a second direct current and a third direct current that are respectively used to charge a power battery and a low-voltage battery; a DC/AC conversion circuit, coupled to the power battery, and configured to convert, into a second alternating current, a fourth direct current output by the power battery, where the second alternating current is used to supply power to a power-consuming device; and a controller, coupled to the AC/DC conversion circuit, the DC/DC conversion circuit, and the DC/AC conversion circuit, and configured to control output voltages and/or output currents of the AC/DC conversion circuit, the DC/DC conversion circuit, and the DC/AC conversion circuit.

## Description

### CROSS-REFERENCE TO RELATED APPLICATIONS

This application claims priority to Chinese Patent Application No. 202111072647.1, filed with the China National Intellectual Property Administration on September 14, 2021 and entitled "CHARGING AND DISCHARGING APPARATUS AND VEHICLE", which is incorporated herein by reference in its entirety.

### TECHNICAL FIELD

This application relates to the field of new energy vehicles, and in particular, to a charging and discharging apparatus and a vehicle.

### BACKGROUND

Currently, an on-board charger (on-board charger, OBC) and a power-consuming device, for example, an air-conditioner compressor or a positive temperature coefficient (positive temperature coefficient, PTC) heater, on an electric vehicle are independent components. The OBC and the power-consuming device each are configured with a controller, and need to be configured with an independent power distribution cable.

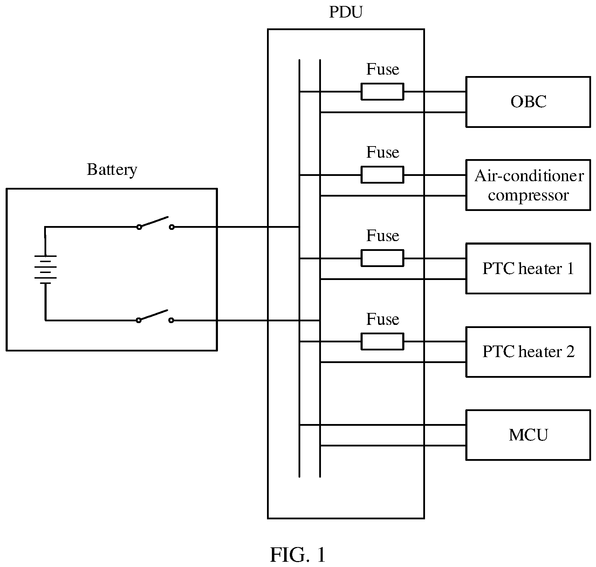

As shown in FIG. 1, an OBC, an air-conditioner compressor, a PTC heater, a motor control unit (motor control unit, MCU), and the like are connected to a battery through a high-voltage power distribution unit (power distribution unit, PDU). The battery may be a high-voltage power battery, or may be a low-voltage battery. During actual application, the OBC converts an input alternating current into a direct current, and charges the battery through the PDU. A direct current output by the battery is distributed to different power-consuming devices such as the air-conditioner compressor, the PTC heater, and the MCU through the PDU. Each power-consuming device is configured with an independent controller. The OBC is also configured with a controller.

In the architecture shown in FIG. 1, the OBC and the power-consuming device each need to be configured with the controller, and need to be configured with an independent power distribution cable. Consequently, the electric vehicle has a complex structural layout, low integration, and high costs.

### SUMMARY

Embodiments of this application provide a charging and discharging apparatus and a vehicle, to reduce complexity of a structural layout of an electric vehicle, improve integration of the electric vehicle, and reduce costs of the electric vehicle.

According to a first aspect, an embodiment of this application provides a charging and discharging apparatus. Specifically, the charging and discharging apparatus includes an alternating current AC/direct current DC conversion circuit, a DC/DC conversion circuit, a DC/AC conversion circuit, a controller, and a first power-consuming device. The AC/DC conversion circuit is configured to convert an input first alternating current into a first direct current. The DC/DC conversion circuit is coupled to the AC/DC conversion circuit, and is configured to rectify the first direct current to output a second direct current and a third direct current. The second direct current is used to charge a power battery. The third direct current is used to charge a low-voltage battery. The DC/AC conversion circuit is coupled to the power battery, and is configured to convert, into a second alternating current, a fourth direct current output by the power battery. The second alternating current is used to supply power to the first power-consuming device. The controller is coupled to the AC/DC conversion circuit, the DC/DC conversion circuit, and the DC/AC conversion circuit, and is configured to control output voltages and/or output currents of the AC/DC conversion circuit, the DC/DC conversion circuit, and the DC/AC conversion circuit.

The first power-consuming device may be an air-conditioner compressor.

In the charging and discharging apparatus according to the first aspect, the AC/DC conversion circuit and the DC/DC conversion circuit are configured to implement an OBC function, and the DC/AC conversion circuit is configured to implement kinetic energy for supplying power to the first power-consuming device. The charging and discharging apparatus according to the first aspect includes only one controller that is configured to control the output voltages and/or the output currents of the AC/DC conversion circuit, the DC/DC conversion circuit, and the DC/AC conversion circuit. In other words, functional modules configured to charge on-board batteries (the low-voltage battery and the power battery) and a functional module configured to supply power to the first power-consuming device are controlled by using one controller. Compared with a solution in the conventional technology, this solution can reduce a quantity of controllers and power distribution cables to be configured. Therefore, complexity of a structural layout of an electric vehicle can be reduced, integration of the electric vehicle can be improved, and costs of the electric vehicle can be reduced.

In a possible design, the charging and discharging apparatus according to the first aspect may further include a first high-voltage filter circuit. The first high-voltage filter circuit is coupled to the DC/DC conversion circuit, and is configured to perform high-voltage filtering on the second direct current to obtain a fifth direct current. The fifth direct current is used to charge the power battery.

According to the foregoing solution, the second direct current can be filtered by using the first high-voltage filter circuit to charge the power battery.

In a possible design, the charging and discharging apparatus according to the first aspect may further include a low-voltage filter circuit. The low-voltage filter circuit is coupled to the DC/DC conversion circuit, and is configured to perform low-voltage filtering on the third direct current to obtain a sixth direct current. The sixth direct current is used to charge the low-voltage battery.

According to the foregoing solution, the third direct current can be filtered by using the low-voltage filter circuit to charge the low-voltage battery.

In a possible design, the controller includes a main control chip. The main control chip is configured to control the output voltages and/or the output currents of the AC/DC conversion circuit, the DC/DC conversion circuit, and the DC/AC conversion circuit based on a received reference signal.

The reference signal may be at least one of a controller area network CAN communication signal, a local interconnect network LIN communication signal, a level signal, a pulse-width modulation PWM signal, and a temperature sampling signal.

According to the foregoing solution, each conversion circuit can be controlled by using the main control chip in the controller.

In addition, the controller may further include a signal filter circuit. The signal filter circuit is configured to: receive the reference signal, perform filtering on the reference signal, and output a filtered reference signal to the main control chip.

According to the foregoing solution, the reference signal is generated from the outside, and is transmitted to the main control chip through the signal filter circuit.

In another possible design, the controller may further include a vehicle control unit VCU that is configured to: generate the reference signal, and output the reference signal to the main control chip.

According to the foregoing solution, the reference signal is generated by the VCU in the controller, and is transmitted to the main control chip.

Further, the VCU is configured to generate a control instruction. The control instruction is used to control a vehicle. The charging and discharging apparatus further includes a signal filter circuit that is coupled to the VCU and that is configured to: perform filtering on the control instruction, and output a filtered control instruction.

According to the foregoing solution, in addition to generating the reference signal, the VCU is further configured to control the vehicle, and the control instruction generated by the VCU is transmitted through the signal filter circuit.

In a possible design, the controller further includes a secondary source circuit. The secondary source circuit is coupled to the low-voltage battery, and is configured to convert, into an eighth direct current, a seventh direct current output by the low-voltage battery. The eighth direct current is used to supply power to the main control chip.

According to the foregoing solution, the secondary source circuit can supply power to the main control chip.

In addition, the controller may further include peripheral circuits such as a sampling circuit, a drive circuit, a protection circuit, and a communication circuit. These peripheral circuits may also be powered by the secondary source circuit. During actual application, the secondary source circuit may include a plurality of conversion modules configured to generate different voltages to supply power to different circuits.

In a possible design, the DC/DC conversion circuit may further rectify the first direct current to output a ninth direct current. The ninth direct current is used to supply power to a second power-consuming device.

The second power-consuming device may be a positive temperature coefficient PTC heater.

According to the foregoing solution, the second power-consuming device that is powered in a direct current manner can be powered through the DC/DC conversion circuit.

Further, the charging and discharging apparatus according to the first aspect may further include a second high-voltage filter circuit. The second high-voltage filter circuit is coupled to the DC/DC conversion circuit, and is configured to perform high-voltage filtering on the ninth direct current to obtain a tenth direct current. The tenth direct current is used to supply power to the second power-consuming device.

According to a second aspect, an embodiment of this application further provides a vehicle. The vehicle includes a power battery, a low-voltage battery, and the charging and discharging apparatus according to any one of the first aspect and the possible designs of the first aspect. The charging and discharging apparatus is configured to charge the power battery and the low-voltage battery.

In a possible design, the charging and discharging apparatus includes an air-conditioner compressor. The air-conditioner compressor is configured to cool or heat the vehicle.

In addition, it should be understood that, for technical effects brought by any one of the second aspect and possible design manners of the second aspect, refer to the technical effects brought by different design manners of the first aspect. Details are not described herein again.

### BRIEF DESCRIPTION OF DRAWINGS

FIG. 1 is a schematic diagram of a structure of a charging and discharging system in the conventional technology;
FIG. 2 is a schematic diagram of a structure of an OBC according to an embodiment of this application;
FIG. 3 is a schematic diagram of a structure of an air-conditioner compressor according to an embodiment of this application;
FIG. 4 is a schematic diagram of a structure of a first charging and discharging apparatus according to an embodiment of this application;
FIG. 5 is a schematic diagram of a structure of a second charging and discharging apparatus according to an embodiment of this application;
FIG. 6 is a schematic diagram of a structure of a third charging and discharging apparatus according to an embodiment of this application; and
FIG. 7 is a schematic diagram of a structure of a vehicle according to an embodiment of this application.

### DESCRIPTION OF EMBODIMENTS

As described in the background, in the charging and discharging system shown in FIG. 1, the OBC and the power-consuming device are two independent modules, and the OBC and the power-consuming device each are configured with the controller.

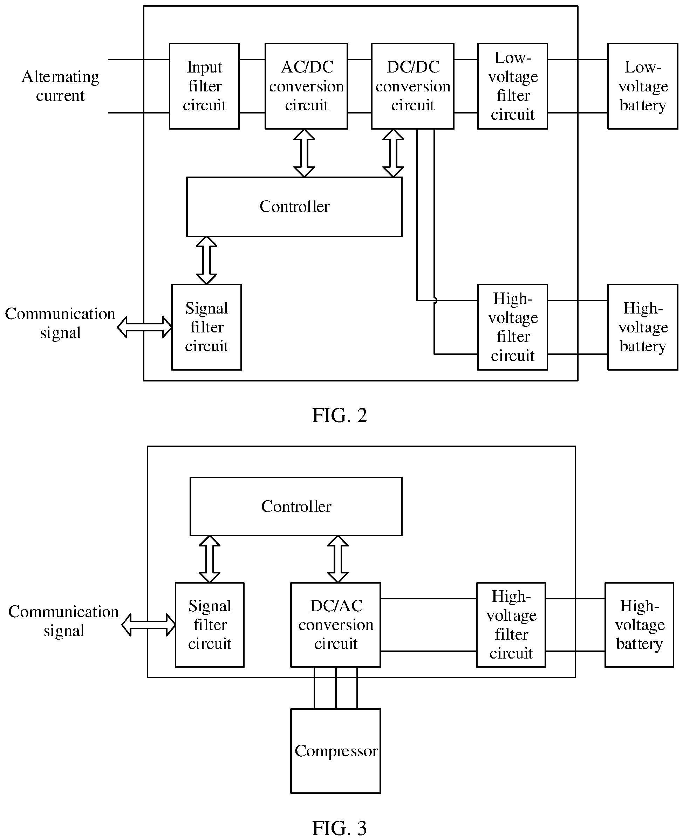

For example, FIG. 2 is a schematic diagram of a possible structure of the OBC. In FIG. 2, an input filter circuit performs filtering on an input alternating current, and then a filtered alternating current is output to an alternating current (alternating current, AC)/direct current (direct current, DC) conversion circuit. DC/DC conversion is performed on a direct current obtained through conversion, and then a converted current separately charges a low-voltage battery and a high-voltage power battery through a low-voltage filter circuit and a high-voltage filter circuit. In addition, the OBC further includes a signal filter circuit and a controller. The signal filter circuit is configured to receive reference signals such as a low-voltage power supply signal, a controller area network (controller area network, CAN) communication signal, a local interconnect network (local interconnect network, LIN) communication signal, a wake-up signal, a light-emitting diode (light-emitting diode, LED) indicator drive signal, a pulse-width modulation (pulse-width modulation, PWM) signal, a high/low level control signal, an electronic lock drive signal, a temperature sampling signal, and a contactor adhesion detection signal. The controller is configured to control output voltages/output currents of the AC/DC conversion circuit and the DC/DC conversion circuit based on the reference signals.

For example, FIG. 3 is a schematic diagram of a possible structure of the air-conditioner compressor. In FIG. 3, the high-voltage filter circuit performs filtering on a direct current output by a high-voltage battery, and then a filtered direct current is output to a DC/AC conversion circuit. An alternating current obtained through conversion is used to supply power to the compressor. Similarly, the air-conditioner compressor also includes a signal filter circuit and a controller. The signal filter circuit is configured to receive the reference signal. The controller is configured to control an output voltage/output current of the DC/AC conversion circuit based on the reference signal.

In the architectures shown in FIG. 1 and FIG. 3, the OBC and a power-consuming device each need to be configured with a controller, and need to be configured with an independent power distribution cable. Consequently, an electric vehicle has a complex structural layout, low integration, and high costs.

The following further describes in detail embodiments of this application with reference to the accompanying drawings.

It should be noted that, in embodiments of this application, "a plurality of" means two or more than two. In the descriptions of this application, terms such as "first" and "second" are merely used for distinction and description, and should not be understood as an indication or implication of relative importance, or as an indication or implication of an order. In embodiments of this application, "coupling" indicates an electrical connection, and may specifically include two manners: a direct connection or an indirect connection.

An embodiment of this application provides a charging and discharging apparatus. The charging and discharging apparatus has functions of both the OBC and the power-consuming device in the charging and discharging system shown in FIG. 1. The power-consuming device may be an air-conditioner compressor or a PTC heater. The OBC and the power-consuming device share one controller.

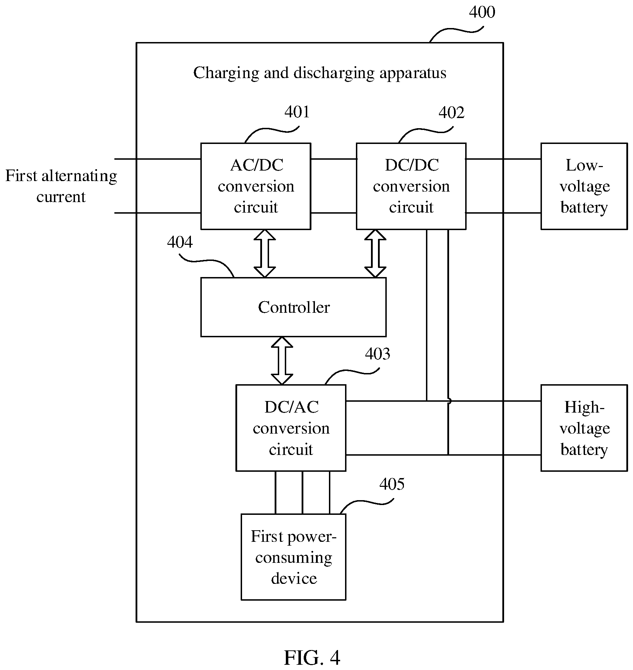

Specifically, as shown in FIG. 4, a charging and discharging apparatus 400 includes an AC/DC conversion circuit 401, a DC/DC conversion circuit 402, a DC/AC conversion circuit 403, a controller 404, and a first power-consuming device 405. The AC/DC conversion circuit 401 is configured to convert an input first alternating current into a first direct current. The DC/DC conversion circuit 402 is coupled to the AC/DC conversion circuit 401, and is configured to rectify the first direct current to output a second direct current and a third direct current. The second direct current is used to charge a power battery. The third direct current is used to charge a low-voltage battery. The DC/AC conversion circuit 403 is coupled to the power battery, and is configured to convert, into a second alternating current, a fourth direct current output by the power battery. The second alternating current is used to supply power to the first power-consuming device 405. The controller 404 is coupled to the AC/DC conversion circuit 401, the DC/DC conversion circuit 402, and the DC/AC conversion circuit 403, and is configured to control output voltages and/or output currents of the AC/DC conversion circuit 401, the DC/DC conversion circuit 402, and the DC/AC conversion circuit 403.

The first alternating current may be a single-phase alternating current, or may be a three-phase alternating current.

It is not difficult to understand that, in the charging and discharging apparatus 400, the AC/DC conversion circuit 401 and the DC/DC conversion circuit 402 are configured to implement the function of the OBC, and the DC/AC conversion circuit 403 is configured to implement kinetic energy for supplying power to the first power-consuming device 405. The charging and discharging apparatus 400 includes only one controller that is configured to control the output voltages and/or the output currents of the AC/DC conversion circuit 401, the DC/DC conversion circuit 402, and the DC/AC conversion circuit 403. In other words, functional modules configured to charge on-board batteries (the low-voltage battery and the power battery) and a functional module configured to supply power to the first power-consuming device 405 are controlled by using one controller. Compared with a solution in the conventional technology, this solution can reduce a quantity of controllers and power distribution cables to be configured. Therefore, complexity of a structural layout of an electric vehicle can be reduced, integration of the electric vehicle can be improved, and costs of the electric vehicle can be reduced.

In addition, the charging and discharging apparatus 400 may further include a first high-voltage filter circuit. The first high-voltage filter circuit is coupled to the DC/DC conversion circuit 402, and is configured to perform high-voltage filtering on the second direct current to obtain a fifth direct current. The fifth direct current is used to charge the power battery.

Similarly, the charging and discharging apparatus 400 may also include a low-voltage filter circuit. The low-voltage filter circuit is coupled to the DC/DC conversion circuit 402, and is configured to perform low-voltage filtering on the third direct current to obtain a sixth direct current. The sixth direct current is used to charge the low-voltage battery.

In embodiments of this application, the filter circuit is configured to filter out a ripple and an interference signal in a voltage signal. The filter circuit may be a filter capacitor or a filter inductor, or may be a composite filter circuit including a filter capacitor and a filter inductor. For an implementation of the filter circuit in embodiments of this application, refer to the conventional technology. Details are not described herein.

As described above, the controller 404 is configured to control the output voltages/output currents of the three conversion circuits in the charging and discharging apparatus. During actual application, the controller 404 may include a main control chip. The main control chip is configured to control the output voltages and/or the output currents of the AC/DC conversion circuit 401, the DC/DC conversion circuit 402, and the DC/AC conversion circuit 403 based on a received reference signal. Specifically, the reference signal may be at least one of signals such as a low-voltage power supply signal, a CAN communication signal, a LIN communication signal, a wake-up signal, an LED indicator drive signal, a PWM signal, a level signal, an electronic lock drive signal, a temperature sampling signal, and a contactor adhesion detection signal.

It should be noted that, in embodiments of this application, there may be one or a plurality of main control chips in the controller 404. If there is one main control chip, the main control chip is configured to control the three conversion circuits. If there are a plurality of main control chips, the plurality of main control chips cooperate to control the three conversion circuits. A cooperation manner may be that different main control chips are configured to control different conversion circuits, or the plurality of main control chips mutually cooperate in a process to jointly control the three conversion circuits.

The controller 404 may further include a secondary source circuit. The secondary source circuit is coupled to the low-voltage battery, and is configured to convert, into an eighth direct current, a seventh direct current output by the low-voltage battery. The eighth direct current is used to supply power to the main control chip. In other words, the secondary source circuit is configured to supply power to the main control chip.

In addition, the controller 404 may further include some peripheral circuits such as a sampling circuit, a drive circuit, a protection circuit, and a communication circuit. Details are not described herein.

Similarly, the secondary source circuit may further convert the seventh direct current output by the low-voltage battery, to supply power to the peripheral circuits such as the sampling circuit, the drive circuit, and the communication circuit. In other words, the secondary source circuit may include a plurality of modules. The plurality of modules are respectively configured to supply power to different circuits/components.

It is not difficult to learn that, for the controller 404, the controller 404 needs to obtain the reference signal to complete control on the AC/DC conversion circuit 401, the DC/DC conversion circuit 402, and the DC/AC conversion circuit 403. During actual application, these reference signals may be generated inside the controller 404, or may be obtained from the outside. The following separately describes the two implementations.

### Implementation 1

In Implementation 1, the reference signal required by the controller 404 is obtained from the outside. In this case, the charging and discharging apparatus 400 may further include a signal filter circuit. The signal filter circuit is configured to: receive the reference signal input from the outside, perform filtering on the reference signal, and output a filtered reference signal to the main control chip.

During actual application, the reference signal may be generated by an external vehicle control unit (vehicle control unit, VCU). In addition, the reference signal may alternatively be generated by a thermal management system (thermal management system, TMS). It should be understood that, in embodiments of this application, the reference signal includes a plurality of types of signals. The VCU may be configured to generate some of the signals, and the TMS may also be configured to generate some of the signals.

In addition, during actual application, the signal filter circuit is further configured to output the reference signal or a control instruction generated by the controller 404 for use by another external component.

### Implementation 2

In Implementation 2, the reference signal required by the controller 404 is generated inside the controller 404. In this case, the controller 404 may further include a VCU. The VCU is configured to: generate the reference signal, and output the reference signal to the main control chip.

Similarly, the controller 404 may also include a TMS. Similar to that in the Implementation 1, during actual application, the VCU may be configured to generate some of the reference signals, and the TMS may be configured to generate some of the reference signals.

The VCU is further configured to generate a control instruction based on an obtained status of a vehicle and an operation intention of a driver. The control instruction is used to control the vehicle. In this case, the charging and discharging apparatus 400 may further include a signal filter circuit. The signal filter circuit is configured to: perform filtering on the control instruction, and output a filtered control instruction. Another component may perform a corresponding operation based on the control instruction, to control the vehicle. A process in which the VCU control the vehicle is the conventional technology. Details are not described herein.

In addition, the main control chip and modules such as the VCU and the TMS in the controller 404 may need to obtain some signals or instructions during actual application. These signals or instructions may also be input through the signal filter circuit.

Optionally, the DC/DC conversion circuit 402 may further rectify the first direct current to output a ninth direct current. The ninth direct current is used to supply power to a second power-consuming device.

The second power-consuming device may be a PTC heater.

It is not difficult to learn that the first power-consuming device is a device powered in an alternating current manner, and the second power-consuming device is a device powered in a direct current manner. In embodiments of this application, the functional modules configured to charge batteries (the power battery and the low-voltage battery) and the functional module configured to supply power to the power-consuming device (including the first power-consuming device 405 and the second power-consuming device) are integrated into one module, and share the controller 404.

Further, the charging and discharging apparatus 400 may further include a second high-voltage filter circuit. The second high-voltage filter circuit is coupled to the DC/DC conversion circuit 402, and is configured to perform high-voltage filtering on the ninth direct current to obtain a tenth direct current. The tenth direct current is used to supply power to the second power-consuming device.

In conclusion, according to the charging and discharging apparatus provided in embodiments of this application, the functional modules (namely, the AC/DC conversion circuit 401 and the DC/DC conversion circuit 402) configured to charge the batteries and the functional module configured to supply power to the first power-consuming device 405 are integrated into one module, and share one controller. In this way, compared with that in the solution in the conventional technology, the quantity of controllers and power distribution cables that are to be configured can be reduced. Therefore, complexity of the structural layout of the electric vehicle can be reduced, integration of the electric vehicle can be improved, and costs of the electric vehicle can be reduced.

In addition, it should be noted that, in embodiments of this application, the first power-consuming device 405 may also be considered as an independent module outside the charging and discharging apparatus 400. This is not specifically limited in embodiments of this application.

The following describes the charging and discharging apparatus provided in embodiments of this application by using one specific example.

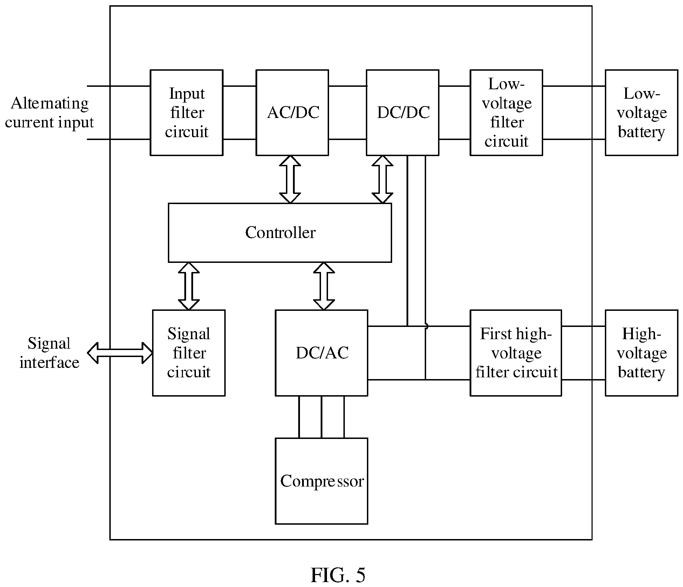

A charging and discharging apparatus shown in FIG. 5 may be considered as a specific example of the charging and discharging apparatus 400. As shown in FIG. 5, the charging and discharging apparatus includes an alternating current input interface, a low-voltage battery interface, a high-voltage battery interface, a signal interface, an input filter circuit, an AC/DC conversion circuit, a DC/DC conversion circuit, a low-voltage filter circuit, a controller, a signal filter circuit, a DC/AC conversion circuit, a first high-voltage filter circuit, and a compressor. The controller includes a secondary source circuit, a main control chip, and peripheral circuits such as a sampling circuit, a drive circuit, a protection circuit, and a communication circuit. A VCU and a TMS may be integrated in the controller. Specifically, the alternating current input interface may be connected to a single-phase or three-phase alternating current input. The low-voltage battery interface is connected to a 12 V low-voltage battery. The high-voltage battery interface is connected to a high-voltage power battery on the electric vehicle. The signal interface is an external communication interface or another signal interface, and is configured to transmit the foregoing reference signal.

In the charging and discharging apparatus shown in FIG. 5, modules configured to charge the low-voltage battery and charge the high-voltage battery and the air-conditioner compressor share the signal interface, the signal filter circuit, the controller, the first high-voltage filter circuit, and the high-voltage battery interface. In this way, costs are lower after integration.

In addition, a housing of the OBC and a housing of the air-conditioner compressor may be integrated together. The OBC and the air-conditioner compressor share one housing or are formed together by using a plurality of structural parts. This can further reduce a volume after integration.

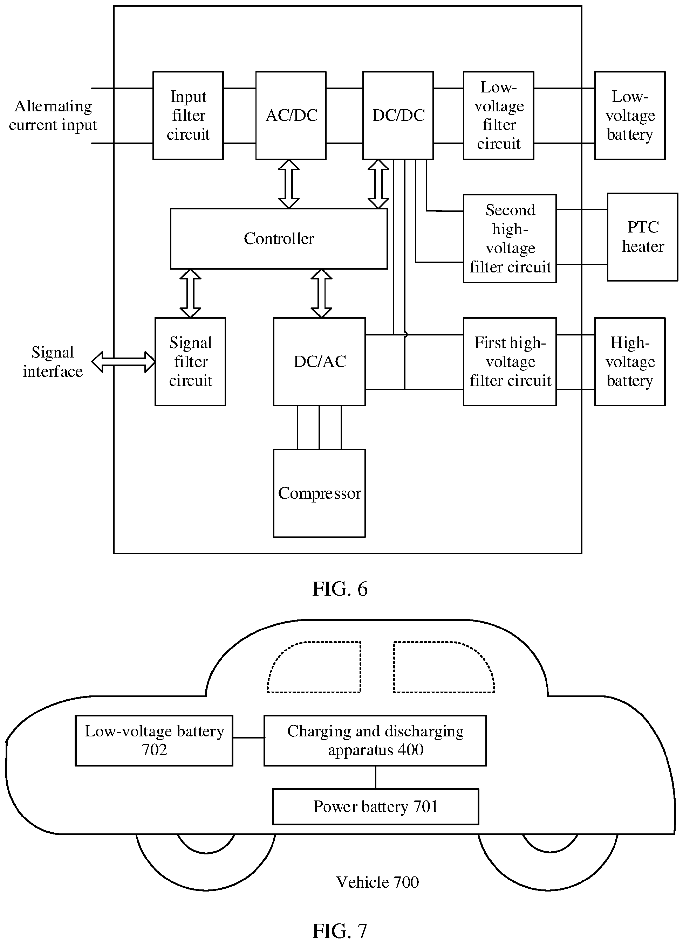

Further, the charging and discharging apparatus shown in FIG. 5 may include a second high-voltage filter circuit shown in FIG. 6. The second high-voltage filter circuit performs high-voltage filtering on a direct current output by the DC/DC conversion circuit, to supply power to the PTC heater.

Based on a same inventive concept, an embodiment of this application further provides a vehicle. As shown in FIG. 7, the vehicle 700 includes a power battery 701, a low-voltage battery 702, and the foregoing charging and discharging apparatus 400. The charging and discharging apparatus 400 is configured to charge the power battery 701 and the low-voltage battery 702.

The charging and discharging apparatus 400 may include an air-conditioner compressor. The air-conditioner compressor is configured to cool or heat the vehicle 700.

It should be noted that, for an implementation, that is not described in detail, of the vehicle 700 and a technical effect thereof, refer to the related descriptions of the foregoing charging and discharging apparatus 400. Details are not described herein again.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A charging and discharging apparatus, comprising an alternating current AC/direct current DC conversion circuit, a DC/DC conversion circuit, a DC/AC conversion circuit, a controller, and a first power-consuming device, wherein
the AC/DC conversion circuit is configured to convert an input first alternating current into a first direct current;
the DC/DC conversion circuit is coupled to the AC/DC conversion circuit, and is configured to rectify the first direct current to output a second direct current and a third direct current, wherein the second direct current is used to charge a power battery, and the third direct current is used to charge a low-voltage battery;
the DC/AC conversion circuit is coupled to the power battery, and is configured to convert, into a second alternating current, a fourth direct current output by the power battery, wherein the second alternating current is used to supply power to the first power-consuming device; and
the controller is coupled to the AC/DC conversion circuit, the DC/DC conversion circuit, and the DC/AC conversion circuit, and is configured to control output voltages and/or output currents of the AC/DC conversion circuit, the DC/DC conversion circuit, and the DC/AC conversion circuit.

2. The charging and discharging apparatus according to claim 1, further comprising:
a first high-voltage filter circuit, coupled to the DC/DC conversion circuit, and configured to perform high-voltage filtering on the second direct current to obtain a fifth direct current, wherein the fifth direct current is used to charge the power battery.

3. The charging and discharging apparatus according to claim 1 or 2, further comprising:
a low-voltage filter circuit, coupled to the DC/DC conversion circuit, and configured to perform low-voltage filtering on the third direct current to obtain a sixth direct current, wherein the sixth direct current is used to charge the low-voltage battery.

4. The charging and discharging apparatus according to any one of claims 1 to 3, wherein the controller comprises:
a main control chip, configured to control the output voltages and/or the output currents of the AC/DC conversion circuit, the DC/DC conversion circuit, and the DC/AC conversion circuit based on a received reference signal, wherein the reference signal is at least one of a controller area network CAN communication signal, a local interconnect network LIN communication signal, a level signal, a pulse-width modulation PWM signal, and a temperature sampling signal.

5. The charging and discharging apparatus according to claim 4, further comprising:
a signal filter circuit, configured to: receive the reference signal, perform filtering on the reference signal, and output a filtered reference signal to the main control chip.

6. The charging and discharging apparatus according to claim 4, wherein the controller further comprises:
a vehicle control unit VCU, configured to: generate the reference signal, and output the reference signal to the main control chip.

7. The charging and discharging apparatus according to claim 6, wherein the VCU is further configured to:
generate a control instruction, wherein the control instruction is used to control a vehicle; and
the charging and discharging apparatus further comprises:
a signal filter circuit, coupled to the VCU, and configured to: perform filtering on the control instruction, and output a filtered control instruction.

8. The charging and discharging apparatus according to any one of claims 4 to 7, wherein the controller further comprises:
a secondary source circuit, coupled to the low-voltage battery, and configured to convert, into an eighth direct current, a seventh direct current output by the low-voltage battery, wherein the eighth direct current is used to supply power to the main control chip.

9. The charging and discharging apparatus according to any one of claims 1 to 8, wherein the first power-consuming device is an air-conditioner compressor.

10. The charging and discharging apparatus according to any one of claims 1 to 9, wherein the DC/DC conversion circuit is further configured to:
rectify the first direct current to output a ninth direct current, wherein the ninth direct current is used to supply power to a second power-consuming device.

11. The charging and discharging apparatus according to claim 10, further comprising:
a second high-voltage filter circuit, coupled to the DC/DC conversion circuit, and configured to perform high-voltage filtering on the ninth direct current to obtain a tenth direct current, wherein the tenth direct current is used to supply power to the second power-consuming device.

12. The charging and discharging apparatus according to claim 10 or 11, wherein the second power-consuming device is a positive temperature coefficient PTC heater.

13. A vehicle, comprising a power battery, a low-voltage battery, and the charging and discharging apparatus according to any one of claims 1 to 12, wherein the charging and discharging apparatus is configured to charge the power battery and the low-voltage battery.

14. The vehicle according to claim 13, wherein the charging and discharging apparatus comprises an air-conditioner compressor, and the air-conditioner compressor is configured to cool or heat the vehicle.
